# EUROPÄISCHE PATENTSCHRIFT

(11) **EP 1 392 554 B1**
(45) Veröffentlichungstag und Bekanntmachung des Hinweises auf die Patenterteilung: **23.03.2005**
(21) Anmeldenummer: 02745356.2
(22) Anmeldetag: 04.06.2002
(51) Int. Cl.: B62D 5/04, B62D 15/02, B60R 16/02

(54) **ELEKTROMECHANISCHES LENKSYSTEM FÜR EIN FAHRZEUG**
ELECTROMECHANICAL STEERING SYSTEM FOR A VEHICLE
SYSTEME DE DIRECTION ELECTROMECANIQUE POUR UN VEHICULE

(30) Priorität: 07.06.2001 DE 10127816
(43) Veröffentlichungstag der Anmeldung: 03.03.2004
(73) Patentinhaber: ZF Lenksysteme GmbH, 73527 Schwäbisch Gmünd (DE)
(72) Erfinder: ABELE, Wolfgang, 73565 Spraitbach (DE); RUF, Gerhard, 73460 Hüttlingen (DE); FRÖHLICH, Stefan, 73568 Zimmerbach (DE)
(86) Internationale Anmeldenummer: PCT/EP2002/006093
(87) Internationale Veröffentlichungsnummer: WO 2002/100705

(56) Entgegenhaltungen:
- DE-A- 19 755 094
- DE-A- 19 828 513
- DE-A- 19 849 326

## Beschreibung

Die Erfindung bezieht sich auf ein elektromechanisches Lenksystem für ein Fahrzeug nach dem Oberbegriff des Anspruches 1.

Aus der DE-A1-19728513 ist ein derartiges elektromechanisches Lenksystem bekannt, das zur Unterstützung des vom Fahrer erzeugten Lenkmomentes einen die Lenkwelle des Lenksystems beaufschlagenden elektromotori schen Zusatzantrieb aufweist, welcher über ein Schneckengetriebe mit der Lenkwelle kämmt, wodurch ein zusätzliches, die Lenkbewegung des Fahrers unterstützendes Moment in die Lenkwelle eingeleitet werden kann. Um Informationen über den Lenkwinkel bzw. die Lenkwinkelgeschwindigkeit zu erhalten, ist auf der Lenkwelle ein Lenkwinkelsensor vorgesehen, dessen Signale über eine Wickelfeder zu einer gehäuseseitigen Steuerungseinrichtung übertragen werden. Die Wickelfeder befindet sich in einem auf der Lenkwelle aufsitzenden Wickelfedergehäuse und ist einenends mit dem mit der Lenkwelle umdrehenden Sensor und anderenends mit einem gehäusefesten Stecker verbunden, über den ein elektrischer Kontakt zur Steuerungseinrichtung herstellbar ist. Die Wickelfeder ist in der Lage, ohne Beschädigung die während des Fahrbetriebs auftretenden Lenkwellenumdrehungen auszuführen.

Das dort in der DE-A1-19828513 beschriebene Wickelfedergehäuse mit der darin angeordneten Wickelfeder befindet sich in einem Aufnahmeraum innerhalb eines lenkgehäuses, in welchem die Lenkwelle drehbar gelagert ist. In dem Aufnahmeraum im Lenkgehäuse ist auch das Schneckengetriebe angeordnet, welches die Rotorbewegung des Elektromotors auf die Lenkwelle zur Unterstützung der Lenkbewegung überträgt. Damit verhindert wird, dass der Sensor bzw. Kontaktstellen des Sensors oder ein dem Sensor zugeordneter Magnet durch das Schmierfett des Schneckengetriebes verunreinigt werden, ist dort eine Trennwand vorgesehen, die den Aufnahmeraum zweiteilt in einen die Wickelfeder aufnehmenden Abschnitt und einen das Getriebe aufnehmenden Abschnitt. Das Wickelfedergehäuse bildet dabei einen Teil dieser Trennwand.

Aus der DE-A1-19755094 ist ebenfalls ein derartiges elektromechanisches Lenksystem bekannt.

Das Wickelfedergehäuse mit der darin angeordneten Wickelfeder befindet sich in einem Aufnahmeraum innerhalb eines Lenkgehäuses, in welchem die Lenkwelle drehbar gelagert ist. In dem Aufnahmeraum im Lenkgehäuse ist auch das Schneckengetriebe angeordnet, welches die Rotorbewegung des Elektromotors auf die Lenkwelle zur Unterstützung der Lenkbewegung überträgt. Auch hier ist darauf zu achten, dass der Sensor bzw. Kontaktstellen des Sensors oder ein dem Sensor zugeordneter Magnet durch das Schmierfett des Schneckengetriebes nicht verunreinigt werden. Außerdem stellen die Wickelfeder einschließlich Wickelfedergehäuse und Lenkwinkelsensor auch eine Gefahrenquelle für das Schneckengetriebe dar, da dieses im Falle eines Lösens oder Abbrechens eines Bauteiles innerhalb des Aufnahmeraumes blockiert werden kann.

Der Erfindung liegt das Problem zugrunde, ein gattungsgemäßes Lenksystem für ein Fahrzeug mit einfachen Mitteln betriebssicher auszubilden, wobei eine Trennwand im Aufnahmeraum so vorgesehen werden soll, dass für das Wickelfedergehäuse, das einen Teil der Trennwannd bildet, die mechanischen Belastungen reduziert werden.

Dieses Problem wird erfindungsgemäß mit den Merkmalen des Anspruches 1 gelöst.

Das elektromechanische Lenksystem weist einen über eine Trennwand in zwei separate Abschnitte unterteilten Aufnahmeraum auf, wobei in die Trennwand ein Dämpfungselement zur Dämpfung von Schwingungen des Wickelfedergehäuses integriert ist und das Wickelfedergehäuse, insbesondere der Boden des Wickelfedergehäuses, einen Teil der Trennwand bildet. Diese Ausführung zeichnet sich durch eine Reihe von Vorteilen aus:

Auf Grund der Unterteilung in zwei separate Abschnitte, in denen jeweils das Getriebe des Elektromotors und die Wickelfeder aufgenommen ist, ist zum einen die Gefahr unterbunden, dass das Schmierfett des Getriebes in Kontakt mit dem Sensor bzw. Kontaktstellen des Sensors oder einem dem Sensor zugeordneten Magneten gerät, die dadurch beschädigt werden könnten, und zum anderen ein versehentlich gelöstes Teil der Wickelfeder oder des Wickelfedergehäuses oder eines daran angeordneten Bauteiles in die Verzahnung des Getriebes gerät, welches dadurch blockiert werden könnte, was auch ein Blockieren der Lenkung zur Folge hätte. Die Trennwand kann bei der Montage des Lenksystems in den Aufnahmeraum im Lenkgehäuse eingefügt werden; es ist dagegen nicht erforderlich, von vornherein eine Trennwand im Aufnahmeraum vorzusehen.

Da der Boden des Wickelfedergehäuses einen Teil der Trennwand bildet, wird in dieser vorteilhaften Ausführung eine besonders kompakte Bauform erreicht, weil der Boden des Wickelfedergehäuses mit den weiteren Abschnitten der Trennwand in einer gemeinsamen Trennebene liegt.

Das in die Trennwand integrierte Dämpfungselement verringert Schwingungen des Wickelfedergehäuses, insbesondere Radialschwingungen, welche in Radialrichtung quer zur Lenkachse des Lenksystems wirken. Die Schwingungsdämpfung hat eine Reduzierung des Geräuschniveaus zur Folge und verbessert außerdem die Standzeit des Wickelfedergehäuses einschließlich der darin angeordneten Wickelfeder, da die mechanischen Belastungen reduziert werden.

In einer zweckmäßigen Weiterbildung ist das Dämpfungselement ringförmig ausgebildet und in dem zwischen der radialen Außenseite des Wickelfedergehäuses und der Innenseite der umgreifenden radialen Außenwand des Aufnahmeraumes angeordneten Abschnitt der Trennwand vorgesehen. In einer besonders einfachen Ausführung ist das Dämpfungselement eine Dichtung bzw. umfasst eine Dichtung, deren Dichtgummi schwingungsdämpfende Eigenschaften aufweist. Diese Ausführung bietet zudem den Vorteil einer leichten Montage der Trennwand im Aufnahmeraum des Lenkgehäuses.

Das Dämpfungselement, insbesondere die als Dichtring ausgeführte Dichtung, kann auf einen Dichtungsträger aufgeknüpft werden oder aber auf diesen aufgespritzt werden. Der Dichtungsträger ist hierbei entweder mit dem Wickelgehäuse identisch oder ein separat ausgebildeter, jedoch mit dem Wickelgehäuse verbundener Trägerring.

Das Dämpfungselement, insbesondere die Dichtung, kann auch unterschiedliche Wärmedehnungen zwischen Wickelgehäuse und Innenwandung des Aufnahmeraumes kompensieren.

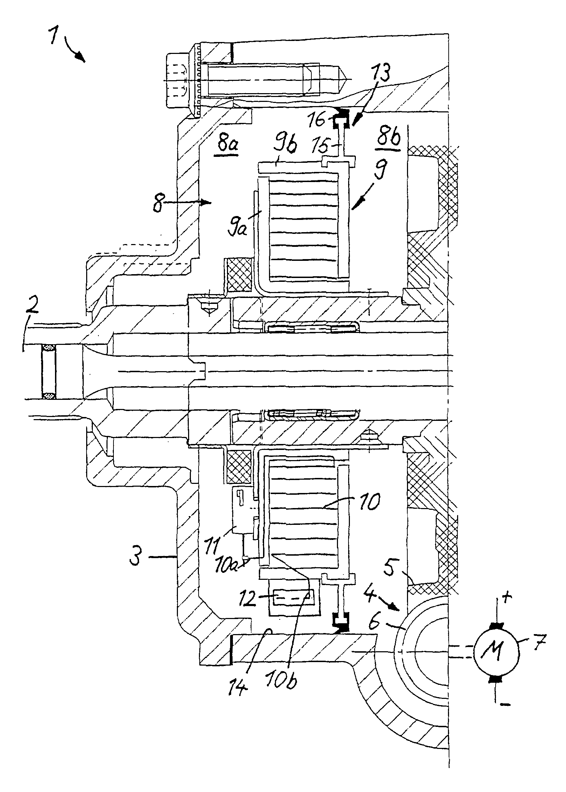

Weitere Vorteile und zweckmäßige Ausführungen sind den weiteren Ansprüchen, der Figurenbeschreibung und der Zeichnung zu entnehmen, in der ein Lenkgehäuse eines elektromechanischen Lenksystems für ein Fahrzeug im Schnitt dargestellt ist.

Das Lenksystem 1 für ein Fahrzeug ist elektromechanisch ausgebildet und umfasst eine in einem Lenkgehäuse 3 angeordnete Lenkwelle 2, über die die Lenkbetätigung des Fahrers auf die gelenkten Räder übertragen wird. Zur Unterstützung der Lenkbetätigung wird über ein Getriebe 4, welches ein mit der Lenkwelle 2 fest umlaufendes Schneckenrad 5 umfasst, über einen Rotor 6 ein unterstützendes Drehmoment eines Elektromotors 7 eingeleitet. Der Elektromotor 7 ist über eine Steuerungseinrichtung in Abhängigkeit von Zustands- und Betriebsgrößen des Fahrzeugs, insbesondere des Lenksystems einzustellen. Der Rotor 6 des Elektromotors 7 bzw. ein vom Rotor des Elektromotors angetriebenes Bauteil 6 stellt in Bezug auf das Schneckenrad ein Antriebsrad dar, dessen Drehbewegung auf das koaxial zur Lenkwelle 2 angeordnete Schneckenrad 5 und weiter auf die Lenkwelle 2 übertragen wird.

In dem Lenkgehäuse 3 ist ein Aufnahmeraum 8 vorgesehen, in welchem die Lenkwelle 2 drehbar gelagert aufgenommen ist. Auch das Getriebe 4 zwischen Elektromotor 7 und Lenkwelle 2 ist in dem Aufnahmeraum 8 angeordnet sowie gegebenenfalls auch der Elektromotor 7.

Weiterhin ist ein Wickelfedergehäuse 9 im Aufnahmeraum 8 vorgesehen, welches ringförmig ausgeführt ist und auf der Lenkwelle 2 aufsitzt und koaxial zu dieser angeordnet ist. Das Wickelfedergehäuse 9 weist einen ersten, der Lenkwelle 2 benachbarten und fest mit der Lenkwelle 2 umlaufenden Gehäuseabschnitt 9a sowie einen zweiten, fest mit dem Lenkgehäuse 3 verbundenen Gehäuseabschnitt 9b auf, so dass die Gehäuseabschnitte 9a und 9b entsprechend der Lenkbewegung der Lenkwelle 2 relativ zueinander verdrehbar sind.

Im Ringraum des Wickelfedergehäuses 9 ist eine Wickelfeder 10 spiralförmig aufgewickelt, deren eines Ende 10a fest mit dem mit der Lenkwelle 2 umlaufenden Gehäuseabschnitt 9a des Wickelfedergehäuses verbunden ist und mit einem Drehmomentsensor 11, der ebenfalls im Aufnahmeraum 8 angeordnet ist und fest mit der Lenkwelle 2 umläuft, kommuniziert. Das zweite Ende 10b der Wickelfeder ist fest mit dem Gehäuseabschnitt 9b des Wickelfedergehäuses verbunden, welches fest mit dem Lenkgehäuse 3 verbunden ist. Das zweite Wickelfederende 10b ist insbesondere mit einer Steckeraufnahme 12 verbunden, die zweckmäßig auf der radialen Außenseite des Wickelfedergehäuses 9 auf dem Gehäuseabschnitt 9b aufsitzt und zur Aufnahme eines Steckers ausgebildet ist, über den Signale, die über die Wickelfeder 10 übertragen werden und Lenkwinkelinformationen vom Drehmomentsensor 11 enthalten, einer Regel- und Steuereinheit zur weiteren Auswertung zuzuführen sind.

Der Aufnahmeraum 8 im Lenkgehäuse 3 ist zweigeteilt mit zwei über eine Trennwand 13 abgeteilten Abschnitten 8a und 8b. Die Trennwand 13 erstreckt sich zwischen der Lenkwelle 2 und der den Aufnahmeraum 8 radial umgreifenden Außenwand 14 des Lenkgehäuses 3, wobei die beiden über die Trennwand 13 separierten Abschnitte 8a und 8b des Aufnahmeraumes zweckmäßig in der Weise abgeteilt sind, dass ein Übertritt von Schmutz und von losen Teilen zwischen beiden Abschnitten des Aufnahmeraumes verhindert ist.

Die Trennwand 13 wird durch eine radiale Wandseite des fest mit dem Lenkgehäuse 3 verbundenen Gehäuseabschnittes 9b des Wickelfedergehäuses 9, einem auf den Gehäuseabschnitt 9b aufgeklipsten, sich radial erstreckenden Trägerring 15 und einer ringförmigen Dichtung 16, die auf den Trägerring 15 aufgeknöpft ist und die verbleibende Lücke zwischen Trägerring und Innenseite der Außenwand 14 des Lenkgehäuses ausfüllt, gebildet. Der radiale Teil des Gehäuseabschnittes 9b, der Trägerring 15 und die Dichtung 16 liegen hierbei in einer gemeinsamen Trennebene. Die Dichtung 16 liegt an der Innenseite der Außenwand 14 des Lenkgehäuses 3 an, wodurch eine vollständige Trennung zwischen den beiden Abschnitten 8a und 8b des Aufnahmeraumes 8 erzielt wird. Auf Grund der Nachgiebigkeit und der Dämpfungseigenschaften der Dichtung 16 wird auch eine Dämpfung radialer Schwingungen und Stöße erreicht, welche von der Lenkwelle 2 ausgehen und die sich über das Wickelfedergehäuse 9 ausbreiten. Die schwingungsdämpfenden Eigenschaften der Dichtung 16 können durch eine entsprechende konstruktive Ausgestaltung der Dichtung verbessert werden, beispielsweise durch eine Dichtlippe, welche vom Dichtkörper der Dichtung 16 absteht und die an der Innenseite der Außenwand 14 anliegt.

In dem ersten Abschnitt 8a des Aufnahmeraumes 8 befindet sich der Drehmomentsensor 11 sowie der größere Teil des Wickelfedergehäuses 9 einschließlich der darin aufgewickelten Wickelfeder 10. Der dem Wickelfedergehäuse 9 zugeordnete Teil der Trennwand 13 wird von dem Boden des Wickelfedergehäuses gebildet. Im zweiten Abschnitt 8b des Aufnahmegehäuses 8 sind das Getriebe mit dem Schneckenrad 5 und dem Rotor 6 bzw. einem vom Rotor beaufschlagten Bauteil 6 und gegebenenfalls auch der Elektromotor 7 angeordnet.

Über die Trennwand 13 wird eine Zentrierung des Wickelfedergehäuses 9 im Aufnahmeraum 8 erreicht, wodurch auch die Reibung zwischen umlaufenden und gehäusefesten Bauteilen sowie die Geräuschentwicklung reduziert werden.

### Bezugszeichenliste

- 1: Lenksystem
- 2: Lenkwelle
- 3: Lenkgehäuse
- 4: Getriebe
- 5: Schneckenrad
- 6: Rotor
- 7: Elektromotor
- 8: Aufnahmeraum
- 8a: Abschnitt
- 8b: Abschnitt
- 9: Wickelfedergehäuse
- 9a: Gehäuseabschnitt
- 9b: Gehäuseabschnitt
- 10: Wickelfeder
- 10a: Ende
- 10b: Ende
- 11: Drehmomentsensor
- 12: Steckeraufnahme
- 13: Trennwand
- 14: Außenwand
- 15: Trägerring
- 16: Dichtung

## Patentansprüche

1. Elektromechanisches Lenksystem für ein Fahrzeug, mit einer in einem Aufnahmeraum (8) eines Lenkgehäuses (3) drehbar gelagerten Lenkwelle (2) und einem die Lenkwelle (2) über. ein Getriebe (4) beaufschlagenden Elektromotor (7), wobei in dem Aufnahmeraum (8) ein Wickelfedergehäuse (9) mit einer Wickelfeder (10) angeordnet ist,
wobei der Aufnahmeraum (8) über eine Trennwand (13) in einen die Wickelfeder (10) aufnehmenden Abschnitt (8a) und einen das Getriebe (4) aufnehmenden Abschnitt (8b) zweigeteilt ist, und wobei das Wickelfedergehäuse (9) einen Teil der Trennwand (13) bildet,
**dadurch gekennzeichnet,**
**dass** in die Trennwand (13) ein Dämpfungselement integriert ist, das eine Dichtung (16) mit einer Dichtlippe umfasst, welche vom Dichtkörper der Dichtung (16) absteht und an der Innenseite einer Außenwand (14) des Lenkgehäuses (3) anliegt.

2. Lenksystem nach Anspruch 1,
**dadurch gekennzeichnet,**
**dass** das Dämpfungselement ringförmig ausgebildet ist und zwischen der radialen Außenseite des Wickelfedergehäuses (9) und der umgreifenden radialen Außenwand (14) des Aufnahmeraumes (8) im Lenkgehäuse (3) angeordnet ist.

3. Lenksystem nach Anspruch 1 oder 2,
**dadurch gekennzeichnet,**
**dass** das Dämpfungselement auf das Wickelfedergehäuse (9) aufgeklipst ist.

4. Lenksystem nach Anspruch 1,
**dadurch gekennzeichnet,**
**dass** die Dichtung (16) auf den Dichtungsträger aufgespritzt ist.

5. Lenksystem nach Anspruch 1,
**dadurch gekennzeichnet,**
**dass** die Dichtung (16) auf den Dichtungsträger aufgeknüpft ist.

6. Lenksystem nach einem der Ansprüche 1 bis 5,
**dadurch gekennzeichnet,**
**dass** der Dichtungsträger das Wickelgehäuse (9) ist.

7. Lenksystem nach einem der Ansprüche 1 bis 5,
**dadurch gekennzeichnet,**
**dass** der Dichtungsträger ein vom Wickelgehäuse (9) separat ausgebildeter, mit dem Wickelgehäuse (9) verbundener Trägerring (15) ist.

8. Lenksystem nach einem der Ansprüche 1 bis 7,
**dadurch gekennzeichnet,**
**dass** ein drehfest mit der Lenkwelle (2) verbundener Sensor (11) zur Ermittlung des Lenkwinkels in dem die Wickelfeder (10) aufnehmenden Abschnitt (8a) des Aufnahmeraumes (8) vorgesehen ist.

9. Lenksystem nach einem der Ansprüche 1 bis 8,
**dadurch gekennzeichnet,**
**dass** das Getriebe (4) zwischen Elektromotor (7) und Lenkwelle (2) ein Schneckengetriebe ist.

## Claims

1. Electromechanical steering system for a vehicle, having a steering shaft (2) which is rotatably mounted in a receptacle space (8) of a steering housing (3), and having an electric motor (7) which acts on the steering shaft (2) via a gear mechanism (4), a flat-spiral-spring housing (9) being arranged in the receptacle space (8) with a flat spiral spring (10), the receptacle space (8) being divided in two by a dividing wall (13) into a section (8a) which accommodates the flat spiral spring (10) and a section (8b) which accommodates the gear mechanism (4), and the flat-spiral-spring housing (9) forming a part of the dividing wall (13), **characterized in that** a damping element is integrated into the dividing wall (13), the said damping element comprising a seal (16) with a sealing lip which protrudes from the sealing body of the seal (16) and is in contact with the inner side of an outer wall (14) of the steering housing (3).

2. Steering system according to Claim 1, **characterized in that** the damping element is of annular design and is arranged in the steering housing (3) between the radial outer side of the flat-spiral-spring housing (9) and the surrounding radial outer wall (14) of the receptacle space (8).

3. Steering system according to Claim 1 or 2, **characterized in that** the damping element is clipped onto the flat-spiral-spring housing (9).

4. Steering system according to Claim 1, **characterized in that** the seal (16) is injection-moulded onto the seal carrier.

5. Steering system according to Claim 1, **characterized in that** the seal (16) is clipped onto the seal carrier.

6. Steering system according to one of Claims 1 to 5, **characterized in that** the seal carrier is the flat-spiral-spring housing (9).

7. Steering system according to one of Claims 1 to 5, **characterized in that** the seal carrier is a carrier ring (15) which is configured separately from the flat-spiral-spring housing (9) and is connected to the flat-spiral-spring housing (9).

8. Steering system according to one of Claims 1 to 7, **characterized in that** a sensor (11) which is connected fixedly to the steering shaft (2) so as to rotate with it is provided **in that** section (8a) of the receptacle space (8) which accommodates the flat spiral spring (10) for determining the steering angle.

9. Steering system according to one of Claims 1 to 8, **characterized in that** the gear mechanism (4) between the electric motor (7) and the steering shaft (2) is a worm gear mechanism.

## Revendications

1. Système de direction électromagnétique pour un véhicule automobile, comprenant un arbre de direction (2) monté à rotation dans un espace de logement (8) d'un carter de direction (3) et un moteur électrique (7) sollicitant l'arbre de direction (2) par le biais d'une transmission (4), un boîtier de ressort d'enroulement (9) avec un ressort d'enroulement (10) étant prévu dans l'espace de logement (8),
l'espace de logement (8) étant divisé, par une paroi de séparation (13), en une portion (8a) recevant le ressort d'enroulement (10) et une portion (8b) recevant la transmission (4), et le boîtier de ressort d'enroulement (9) formant une partie de la paroi de séparation (13),
**caractérisé en ce que**
dans la paroi de séparation (13) est intégré un élément d'amortissement qui comprend un joint d'étanchéité (16) avec une lèvre d'étanchéité, qui dépasse du corps d'étanchéité du joint d'étanchéité (16) et qui s'applique contre le côté intérieur d'une paroi extérieure (14) du carter de direction (3).

2. Système de direction selon la revendication 1,
**caractérisé en ce que**
l'élément d'amortissement a une forme annulaire et est disposé entre le côté extérieur radial du boîtier de ressort d'enroulement (9) et la paroi extérieure radiale d'engagement périphérique (14) de l'espace de logement (8) dans le carter de direction (3).

3. Système de direction selon la revendication 1 ou 2,
**caractérisé en ce que**
l'élément d'amortissement est enclipsé sur le boîtier de ressort d'enroulement (9).

4. Système de direction selon la revendication 1,
**caractérisé en ce que**
le joint d'étanchéité (16) est injecté sur le support d'étanchéité.

5. Système de direction selon la revendication 1,
**caractérisé en ce que**
le joint d'étanchéité (16) est connecté par-dessus le support d'étanchéité.

6. Système de direction selon l'une quelconque des revendications 1 à 5,
**caractérisé en ce que**
le support d'étanchéité est le boîtier d'enroulement (9).

7. Système de direction selon l'une quelconque des revendications 1 à 5,
**caractérisé en ce que**
le support d'étanchéité est une bague de support (15) réalisée séparément du boîtier d'enroulement (9), reliée au boîtier d'enroulement (9).

8. Système de direction selon l'une quelconque des revendications 1 à 7,
**caractérisé en ce que**
l'on prévoit un capteur (11) relié fixe en rotation à l'arbre de direction (2), pour la détection de l'angle de direction dans la portion (8a) de l'espace de logement (8) recevant le ressort d'enroulement (10).

9. Système de direction selon l'une quelconque des revendications 1 à 8,
**caractérisé en ce que**
la transmission (4) entre le moteur électrique (7) et l'arbre de direction (2) est un engrenage à vis sans fin.
